# EUROPEAN PATENT SPECIFICATION

(11) **EP 2 008 906 B1**
(45) Date of publication and mention of the grant of the patent: **13.03.2013**
(21) Application number: 07111168.6
(22) Date of filing: 27.06.2007
(51) Int. Cl.: B62B 3/06

(54) **An industrial truck and a cable module for an industial truck**
Flurförderzeug und Kabelmodul für ein Flurförderzeug
Camion industriel et module de câble pour un camion industriel

(43) Date of publication of application: 31.12.2008
(73) Proprietor: BT Products AB, 595 81 Mjölby (SE)
(72) Inventor: Lennartsson, Sven-Inge, 590 19, MANTORP (SE); Tallberg, Roger, 59019, MANTORP (SE)
(74) Representative: Börlin, Maria

(56) References cited:
- EP-A- 1 298 024
- US-A- 2 325 396
- US-A- 2 592 091
- US-A1- 2005 164 524
- US-B1- 6 260 646

## Description

### TECHNICAL FIELD

The present invention generally relates to a filler arm truck comprising a cable for transmitting control signals and/or power between a first truck part and a second truck part.

### BACKGROUND ART

Cables transferring power or control signals in filler arm trucks are often subject to wear. Especially combined cable loads, yielding e.g. simultaneous bending and torsion stress, have a damaging effect on the cables. Furthermore, the cables can be subject to load in the longitudinal direction and friction.

EP1298024 A2 addresses the problem of cable wear in industrial trucks and suggests a solution wherein an electronic power unit is placed on top of a drive motor. Thereby, relative movement between the power unit and the motor, which are connected by the cable, is precluded.

US2592091 A discloses a tiller arm truck in accordance with the pre-characterising portion of claim 1.

US2005164524 A1 relates to a steering wheel connection device for motor vehicles.>

The aim of the present invention is to provide a filler arm truck in which the cable wear is reduced.

### SUMMARY OF THE INVENTION

The present invention pertains to a filler arm truck according to claim 1, comprising a first and a second truck part, being arranged to be rotatively movable with respect to each other around an axis. A cable is connected between the first truck part and the second truck part. The cable can transmit control signals between the truck parts, or be arranged to supply power from one of the truck parts to the other. Also, the cable can transmit both control signals and power. The cable comprises a cable package unit. The cable of the cable package unit is structurally arranged such that a twisting of the cable package unit, upon rotative movement of the first truck part with respect to the second truck part, causes a bending of the cable within the cable package unit.

The structural arrangement of the cable within the cable package unit cis helical, which implies that rotative movement of one of the truck parts with respect to the other is transferred into a bending movement of the cable within the cable package unit.

The cable module is arranged between a first truck part and a second truck part, which are arranged to be rotatively movable with respect to each other around an axis. The cable module comprises a cable package unit and at least one cable retainer for affixing the cable of the cable package unit to the first or the second truck part. The cable of said cable package unit is structurally arranged such that a twisting of the cable package unit, upon rotative movement of the first truck part with respect to the second truck part, causes a bending of the cable within the cable package unit.

In general, cables endure bending better than twisting. The present structural arrangement of the cable within the cable package unit also entails the advantage that the cable deformation, upon rotative movement of the first truck part with respect to the second truck part, is distributed over a longer cable length. That is, a longer cable length than that of a straight cable.

By means of the cable arrangement of the invention, cable wear is minimized and cable life is increased.

### BRIEF DESCRIPTION OF THE DRAWINGS

- Figure 1: is a partial cross section of a driving and steering component of a tiller arm truck
- Figure 2: shows the driving and steering component of figure 1 in perspective
- Figure 3: is a partial cross section of a tiller arm mounting area
- Figure 4: shows the tiller arm mounting area of figure 3 in perspective
- Figure 5a: is an exploded view of a tiller arm mounting and an upper cable retainer
- Figure 5b: shows the upper cable retainer of figure 5a in perspective from below
- Figure 6: is an exploded view of a brake and a lower cable retainer
- Figure 7: shows an alternative arrangement of a cable in a cable package unit.

### DETAILED DESCRIPTION

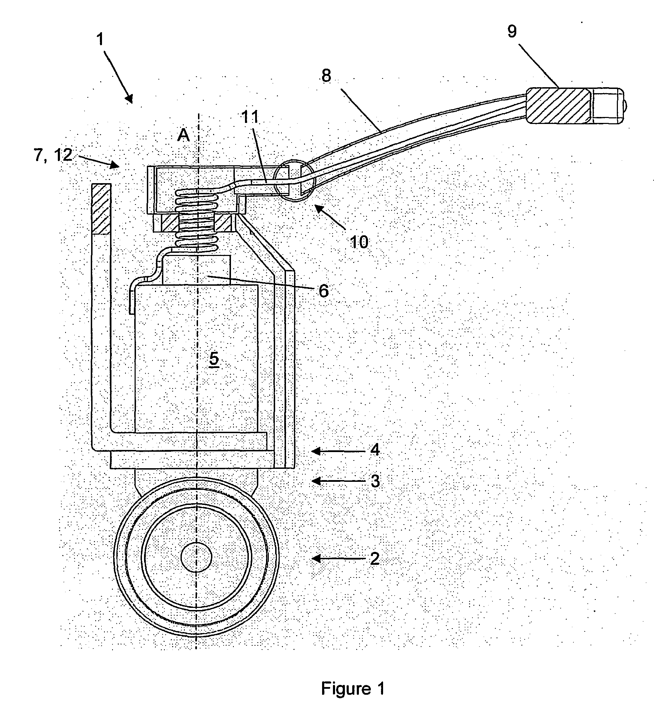

Figure 1 shows a schematic side view of the driving and steering component 1 of a tiller arm truck in partial cross section. This component comprises a wheel 2, a transmission 3, a bearing 4, a motor 5, a brake 6 and a tiller arm mounting 7. All said elements of the driving and steering component 1 are vertically arranged in succession, wherein the wheel 2 is arranged lowest and the tiller arm mounting 7 is arranged highest. A tiller arm 8 extends from said tiller arm mounting, and a handle 9 is located at the end of said tiller arm. The tiller arm 8 is connected to the tiller arm mounting 7 by an articulated joint 10. A cable 11 runs from a logic unit (not shown) in the handle 9 through the tiller arm 8 and the tiller arm mounting 7 to the truck body (not shown). Said cable 11 transmits signals for controlling the truck from the handle 9 to a logic unit (not shown) in the truck body. The cable 11 comprises a cable package unit 12 which is arranged between the brake 6 and the tiller arm mounting 7. In the cable package unit 12, the cable 11 is helically arranged, i.e., the cable 11 runs in a helical manner.

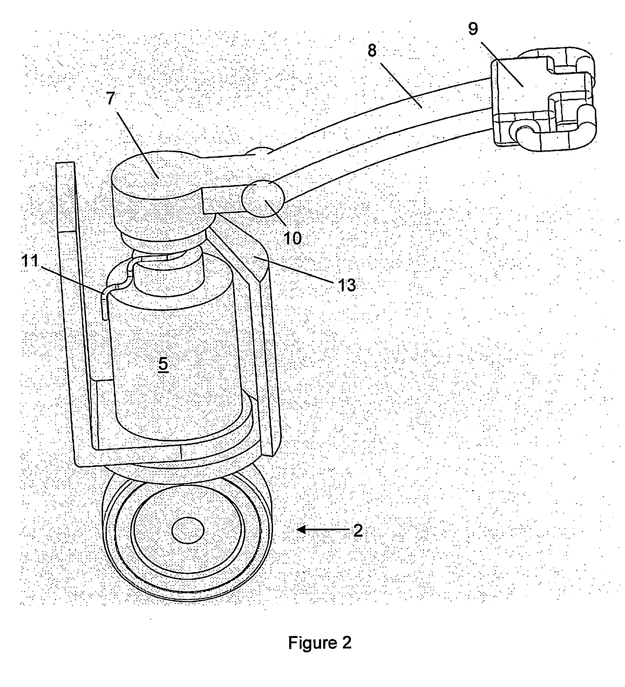

A perspective view of the driving and steering component 1 of figure 1 is shown in figure 2. The tiller arm truck is steered sideways by means of the tiller arm 8. Rotation of the tiller arm causes rotation of the tiller arm mounting 7, which is stationary connected to the wheel through a sweeping member 13. Said sweeping member has a curved cross section and is arched in its upper region so as to closely sweep around the motor 5 and transfer steering force from the tiller arm mounting 7 to the wheel 2. The tiller arm mounting 7, the sweeping member 13 and the wheel 2 are thus rotatively connected to the truck body about a vertical axis A (figure 1), around which the cable package unit 12 is arranged. The structural arrangement, i.e. the helix formation of the cable 11 within the cable package unit 12, transforms any twisting of the cable package unit 12 into a bending movement of the cable 11. Thus, instead of torsion strain and a corresponding torsion stress, the cable is subject to bending strain and a corresponding bending stress.

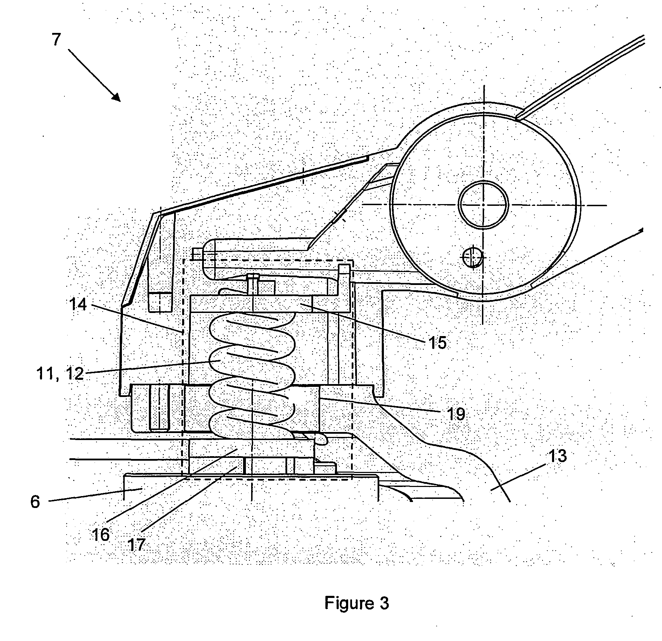

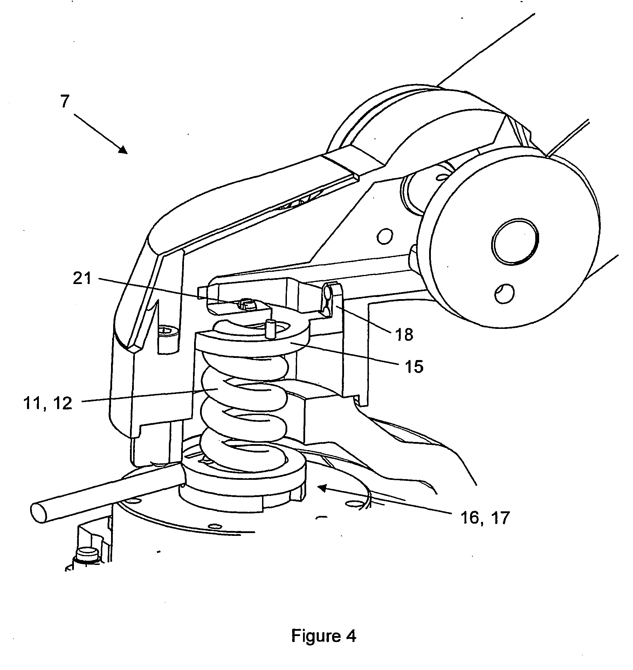

Figures 3 and 4 illustrate the area of the tiller arm mounting 7 in more detail. A cable module 14, enclosed by a dashed line in figure 3, is arranged between the tiller arm mounting 7 and the brake 6. The cable module 14 comprises an upper cable retainer 15 and a lower cable retainer 16, 17, between which the cable package unit 12 is contained. At the upper end of the cable package unit 12, the cable 11 within the cable package unit 12 is held by the upper cable retainer 15. The upper cable retainer 15 comprises a cable support 18, through which the cable runs on its way to the handle 9. From the upper retainer, the cable package unit 12 extends in a direction towards the brake 6, through a vertical aperture 19 in the sweeping member 13. At the lower end of the cable package unit 12, the cable 11 within the cable package unit 12 is held by the lower cable retainer, which consists of a first part 16 and a second part 17.

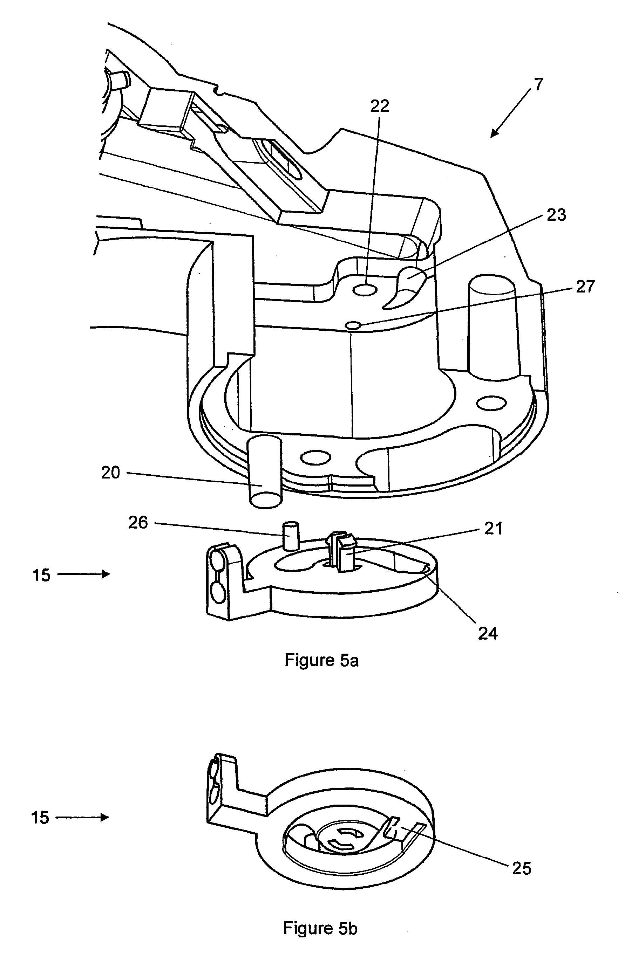

Figure 5a shows a partial cross section of the tiller arm mounting 7 in perspective from below. Compared to the previous figures, the tiller arm mounting is here turned approximately 180° around axis A. A pin 20, protruding downwards from the tiller arm mounting 7, cooperates with a corresponding aperture (not shown) in the sweeping member 13, in order to prevent rotation of the mounting 7 with respect to the sweeping member 13. At a distance below the tiller arm mounting, the upper cable retainer 15 can be seen. Figure 5b shows the upper cable retainer 15 both in perspective from below. The upper cable retainer 15 comprises two protruding elements 21, which, on mounting of the retainer to the tiller arm mounting, extend through a receiving aperture 22 in the tiller arm mounting in a snap fit manner, and thus fasten the upper cable retainer to the tiller arm mounting. As can be seen in figure 4, the cable 11 is held between the upper cable retainer and the tiller arm mounting wall. For this reason, a recess 23 in the latter is arranged to cooperate with a recess 24 in the upper cable retainer 15. Further, said retainer 15 comprises a resilient element 25, constituting a portion of the lower part of the upper cable retainer recess 24. The resilient element 25 is adapted exercise a certain pressure against the cable as the cable runs through the upper cable passage, which passage is formed by the tiller arm mounting recess 23 and the upper cable retainer recess 24. A rotation hindering projection 26 of the upper cable retainer cooperates with a corresponding aperture 27 in the tiller arm mounting wall.

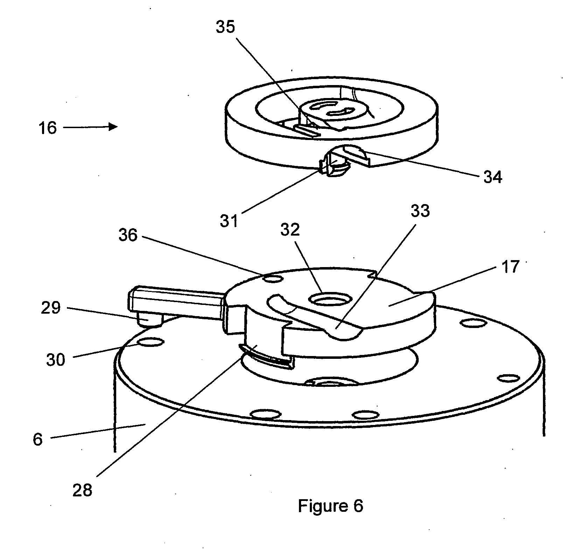

In figure 6, the two parts 16, 17 that constitute the lower cable retainer are shown together with the brake 6. The second lower cable retainer part 17 is snap fitted to the brake by means of two opposed hook shaped brake engaging fasteners 28, one of which is shown in figure 6. Said retainer part further comprises a rotation hindering projection 29 that engages a corresponding aperture 30 in the upper surface of the brake 6. The first lower cable retainer part 16 is snap fitted to the second retainer part 17 by means of two resilient protruding elements 31, which on assembly extend through a second retainer part aperture 32 having an inner flange. Said flange thereby acts as a locking member, fixing the protruding elements 31 axially. In a manner similar to the holding of the cable 11 at the upper and of the helix shaped cable package unit, the two parts 16, 17 of the lower cable retainer retain the cable by means of opposite recesses 33, 34 and a resilient element 35. The two lower cable retainer parts 16, 17 are hindered from rotation with respect to one another by means of a projection at the first part 16 and a corresponding aperture 36 at the second part 17.

Several alternatives to the described rotating hindering means (20; 22, 26; 29, 30; 36) are conceivable. First of all, the protruding elements and the corresponding apertures can switch side. Further, more than one pair of protruding element/receiving aperture can be arranged at each joint where rotation is to be prevented. Also, projections and apertures of alternative shapes can be put to use, for instance, the engaging surfaces of the joints can be serrated.

In the manner described above, the upper and lower cable retainers 15, 16, 17 firmly secure the upper and lower ends of the cable package unit 12 respectively. The inner surfaces 24, 33, 34 of the cable retainers, and the recess 23 of the tiller arm mounting 7, all of which face the cable, have semicircular cross sections, are smooth and correspond well to the form of the cable 11. Together, the cable engaging surfaces of the recesses and the resilient elements 25, 35 form upper and lower passages of essentially circular cross section for the cable 11. Thus, the cable module 14 according to the present invention ensures minimal cable wear and long cable life.

Optionally, both the upper and the lower cable retainer can be of two-part form (present lower retainer 16, 17) or of one part form (present upper retainer 15).

In the tiller arm truck of the present embodiment, the motor 5 does not rotate as the truck is controlled by means of the tiller arm 8. The motor, being stationary with respect to the truck body, can thus be supplied with power from a battery in the truck via stationary power cables, which are not subject to substantive mechanical cable wear. Here, the function of the cable 11, connecting the handle 9 and the truck body, is to transmit control signals. In other tiller arm trucks, however, the motor is not stationary. Instead, the motor rotates with the tiller arm. In such tiller arm trucks, a present cable package unit 12 of the present type can be put to use for transmitting power to the motor.

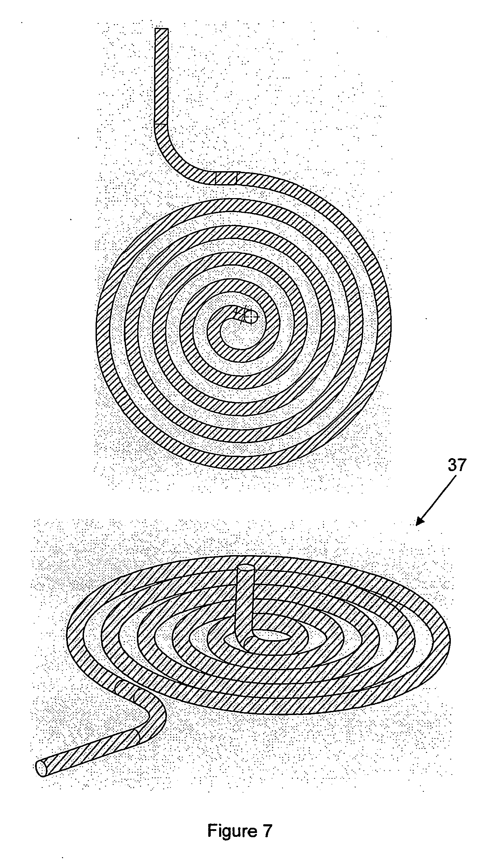

An alternative structural arrangement of the cable within the cable package unit is a spiral formation, see figure 7. As opposed to the helix formation, which extends in three dimensions, the extension of a spiral formation is confined to two dimensions. The helically formed cable of the cable package unit in figure 3 has a height which is roughly equivalent to the number of cable turns times the cable thickness, plus the height of all interstices between the turns. The height of a spirally shaped cable 37 is, however, equal to the cable thickness. Thus, if the cable of a cable package unit has a spiral formation, the height of the cable package unit and thus the corresponding cable module (not shown) is substantially reduced. Consequently, an advantage of using a cable package unit having a spirally shaped cable is that the height of the driving and steering component 1 can be reduced.

Said spiral can be an Archimedean spiral, having evenly spaced turns (figure 7), or a logarithmic spiral (not shown), in which the spacings between adjacent turns increase in geometric progression. An Archimedean spiral entails the advantage of minimizing the outer diametrical size of the spiral, whereas a logarithmic spiral ensures sufficient spacing and thus reduced risk of frictional contact between successive turns.

## Claims

1. A tiller arm truck comprising a first truck part (7) and a second truck part (5), arranged to be rotatively movable with respect to each other around an axis (A), wherein a cable (11) for transmitting control signals and/or power is connected between the first truck part and the second truck part, **characterized in that** said cable (11) of a cable package unit (12) has the form of a helix and is structurally arranged such that a twisting of the cable package unit (12), upon rotative movement of the first truck part (7) with respect to the second truck part (5), causes a bending of the cable (11) within the cable package unit (12).

2. A tiller arm truck according to claim 1, further comprising at least one cable retainer (15; 16, 17), affixing the cable (11) at one end of the structural arrangement (12) of the cable (11).

3. A tiller arm truck according to claim 1 or 2, comprising a first cable retainer (15), attached to said first truck part, and a second cable retainer (16, 17), attached to said second truck part.

4. A tiller arm truck according to claim 2 or 3, wherein the cable retainer (15; 16, 17) comprises a cable passage, which passage has cable engaging surfaces (23, 24; 33, 34) that correspond to the form of the cable (11), thereby ensuring long cable life.

5. A tiller arm truck according to claim 4, wherein the cable passage is formed by two opposing parts having recesses (23, 24; 33, 34) of semicircular cross section.

6. A tiller arm truck according to claim 5, wherein one of the opposing parts encompasses a resilient element (25, 35) that is adapted to exercise a pressure against the cable (11).

## Patentansprüche

1. Deichselstapler mit einem ersten Staplerteil (7) und einem zweiten Staplerteil (5), die im Bezug aufeinander um eine Achse (A) drehbar beweglich ausgebildet sind, wobei ein Kabel (11) zum Übertragen von Steuersignalen und/oder Leistung zwischen dem ersten Staplerteil und dem zweiten Staplerteil verbunden ist, **dadurch gekennzeichnet, dass** das Kabel (11) einer Kabelpackungseinheit (12) die Form einer Helix aufweist und strukturell so ausgebildet ist, dass eine Verdrehung der Kabelpackungseinheit (12) infolge einer Drehbewegung des ersten Staplerteils (7) in Bezug auf das zweite Staplerteil (5) eine Biegung des Kabels (11) in der Kabelpackungseinheit (12) erzeugt.

2. Deichselstapler nach Anspruch 1, der ferner mindestens einen Kabelhalter (15; 16, 17) aufweist, der das Kabel (11) an einem Ende der strukturellen Anordnung (12) des Kabels (11) befestigt.

3. Deichselstapler nach Anspruch 1 oder 2, der einen ersten Kabelhalter (15), der an dem ersten Staplerteil befestigt ist, und einen zweiten Kabelhalter (16, 17) aufweist, der an dem zweiten Kabelteil befestigt ist.

4. Deichselstapler nach Anspruch 2 oder 3, bei dem der Kabelhalter (15; 16, 17) einen Kabeldurchgang aufweist, wobei der Durchgang Kabelangriffsflächen (23, 24; 33, 34) aufweist, die zu der Form des Kabels (11) korrespondieren, wodurch eine lange Kabellebensdauer gesichert wird.

5. Deichselstapler nach Anspruch 4, bei dem der Kabeldurchgang durch zwei gegenüberliegende Teile mit Vertiefungen (23, 24; 33, 34) mit halbkreisförmigen Querschnitt gebildet wird.

6. Deichselstapler nach Anspruch 5, bei dem eines der gegenüberliegenden Teile ein elastisches Element (25, 35) beinhaltet, das dazu ausgebildet ist, einen Druck auf das Kabel (11) auszuüben.

## Revendications

1. Chariot à bras de manoeuvre comprenant une première partie de chariot (7) et une seconde partie de chariot (5), agencées de façon à être mobiles en rotation l'une par rapport à l'autre autour d'un axe (A), dans lequel un câble (11) destiné à transmettre des signaux de commande et/ou une énergie relie la première partie de chariot et la seconde partie de chariot ;
caractérisé en que ledit câble (11) d'une unité de conditionnement de câble (12) a la forme d'une hélice et est structurellement agencé de telle sorte qu'une torsion de l'unité de conditionnement de câble (12), lors d'un déplacement rotatif de la première partie de chariot (7) par rapport à la seconde partie de chariot (5), provoque un pliage du câble (11) à l'intérieur de l'unité de conditionnement de câble (12).

2. Chariot à bras de manoeuvre selon la revendication 1, comprenant en outre au moins un dispositif de retenue de câble (15 ; 16, 17) fixant le câble (11) au niveau d'une extrémité de l'agencement structurel (12) du câble (11).

3. Chariot à bras de manoeuvre selon la revendication 1 ou 2, comprenant un premier dispositif de retenue de câble (15) rattaché à ladite première partie de chariot, et un second dispositif de retenue de câble (16, 17) rattaché à ladite seconde partie de chariot.

4. Chariot à bras de manoeuvre selon la revendication 2 ou 3, dans lequel le dispositif de retenue de câble (15 ; 16, 17) comprend un passage de câble, lequel passage présente des surfaces de mise en prise de câble (23, 24 ; 33, 34) qui correspondent à la forme du câble (11), garantissant de ce fait une longue durée de vie du câble.

5. Chariot à bras de manoeuvre selon la revendication 4, dans lequel le passage de câble est formé par deux parties opposées présentant des renfoncements (23, 24 ; 33, 34) de section transversale semi-circulaire.

6. Chariot à bras de manoeuvre selon la revendication 5, dans lequel l'une des parties opposées englobe un élément élastique (25, 35) qui est adapté pour exercer une pression contre le câble (11).
